# EUROPÄISCHE PATENTANMELDUNG

(11) **EP 0 936 414 A2**
(43) Veröffentlichungstag der Anmeldung: **18.08.1999**
(21) Anmeldenummer: 99102348.2
(22) Anmeldetag: 06.02.1999
(51) Int. Cl.: F24D 10/00

(54) **Wohnungsanschlussstation eines Fernwärmenetzes**

(30) Priorität: 17.02.1998 DE 19806443
(71) Anmelder: WILO GmbH, D-44263 Dortmund (DE)
(72) Erfinder: Stachs, Hartmut, Dr., 39104 Magdeburg (DE); Polzin, Christian, 39365 Eilsleben (DE)
(74) Vertreter: COHAUSZ HANNIG DAWIDOWICZ & PARTNER

(57) **Zusammenfassung**

Die Erfindung betrifft eine Wohnungsanschlußstation eines Fernwärmenetzes mit einem von der Fernwärme gespeisten Fernwärmekreislauf (1), von dem ein Heizkreislauf (9) zum Erwärmen des Gebäudes abzweigt und in dem ein Wärmetauscher (5) liegt, der das Trinkwasser erwärmt. Im Fernwärmekreislauf ist ein Umschaltventil (6) angeordnet ist, das zwischen Fernwärme- und Heizkreislauf umschaltet, und im Vorlauf (11) der Trinkwassererwärmung ein Temperaturfühler (13) sich befindet. Durch die vom Temperaturfühler (13) ermittelten Werte wird das Umschaltventil (6) gesteuert.

## Beschreibung

Die Erfindung betrifft eine Wohnungsanschlußstation eines Fernwärmenetzes mit einem von der Fernwärme gespeisten Fernwärmekreislauf, von dem ein Heizkreislauf zum Erwärmen des Gebäudes abzweigt und in dem ein Wärmetauscher liegt, der das Trinkwasser erwärmt, wobei im Fernwärmekreislauf ein Umschaltventil angeordnet ist, das zwischen Fernwärme- und Heizkreislauf umschaltet, und im Vorlauf der Trinkwassererwärmung ein Temperaturfühler sich befindet.

Es sind die unterschiedlichsten Wohnungsanschlußstationen der eingangs genannten Art für ein Fernwärmenetz bekannt. Diese besitzen mehrere Ventile und Temperaturfühler, insbesondere motorisch betriebene Ventile, um die unterschiedlichen Regelungsaufgaben erfüllen zu können. Hierdurch besteht ein hoher technischer Aufwand und damit hohe Kosten und eine hohe Störanfälligkeit.

Aufgabe der Erfindung ist es, Wohnungsanschlußstationen der eingangs genannten Art so zu verbessern, daß sie bei geringem technischen Aufwand und geringer Störanfälligkeit äußerst schnell auf den Beginn eines Zapfens von warmem Trinkwasser reagieren.

Diese Aufgabe wird erfindungsgemäß dadurch gelöst, daß durch die vom Temperaturfühler ermittelten Werte das Umschaltventil gesteuert wird.

Hierdurch wird eine platzsparende Wohnungsanschlußstation mit einfachem Aufbau und geringen Kosten geschaffen, die schon zu Beginn eines Zapfens von warmem Trinkwasser sehr schnell reagiert und frühzeitig ausreichend warmes Trinkwasser zur Verfügung stellt. Hierbei ist besonders vorteilhaft, wenn durch die Werte des Temperaturfühlers das Umschaltventil derart steuerbar ist, daß bei sinkender Temperatur im Vorlauf der Trinkwassererwärmung das Umschaltventil den Heizkreislauf schließt und den Zu- oder Ablauf des Wärmetauschers öffnet. Auch ist von Vorteil, wenn bei einem schnellen Absinken der Temperatur im Vorlauf der Trinkwassererwärmung das Umschaltventil den Heizkreislauf sofort schießt.

Desweiteren ist es von Vorteil, wenn beim Ansteigen der Temperatur hinter dem Wärmetauscher das Umschaltventil den Zu-und Ablauf des Wärmetauschers wieder schließt und den Heizkreislauf öffnet.

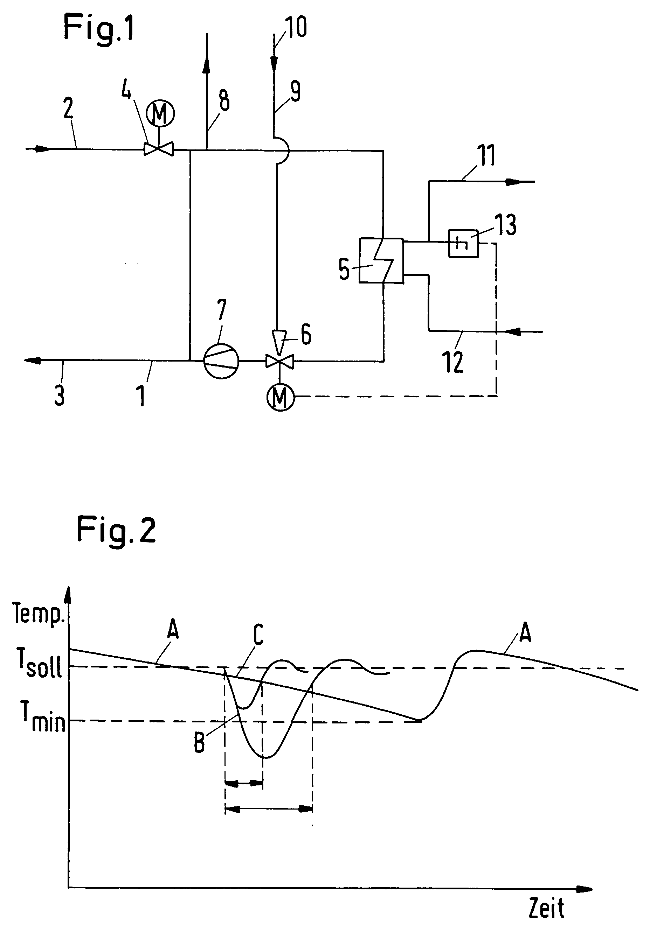

Ein Ausführungsbeispiel der Erfindung ist in der Zeichnung dargestellt und wird im folgenden näher beschrieben. Es zeigen
- Fig. 1: ein Schaltbild der Leitungen und Geräte einer Wohnungsanschlußstation,
- Fig. 2: den Temperaturverlauf im Warmwasservorlauf bei Beginn einer Zapfung und

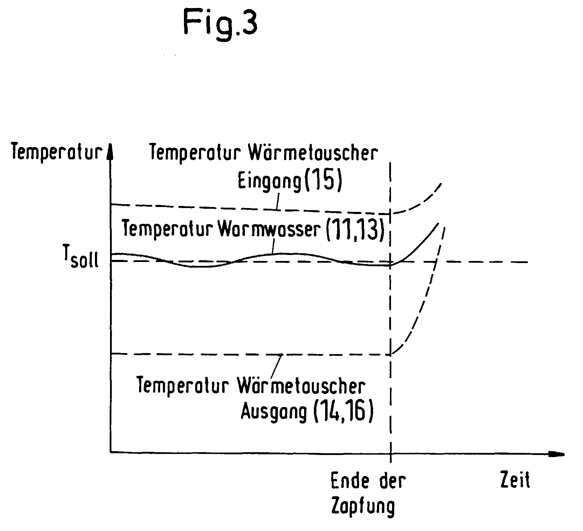

- Fig. 3: den Verlauf der Temperaturen am Ende einer Zapfung.

Ein durch Fernwärme gespeister Fernwärmekreislauf 1 weist einen Fernwärmevorlauf 2 und einen Fernwärmerücklauf 3 auf. Das heiße Medium fließt vom Fernwärmevorlauf 2 über ein Motorventil 4, einen Wärmetauscher 5, ein Umschaltventil 6 und eine Pumpe 7 zurück zum Fernwärmerücklauf 3. Zwischen dem Motorventil 4 und dem Wärmetauscher 5 zweigt ein Vorlauf 8 eines Heizkreislaufes 9 ab, in dem die Heizkörper liegen. Der Heizkreislauf 9 mündet mit einem Rücklauf 10 in das Umschaltventil 6. Durch das motorisch betriebene Umschaltventil 6 kann abwechselnd der Heizkreislauf 9 und der durch den Wärmetauscher 5 fließende Teil des Fernwärmekreislaufes 1 betrieben werden.

Der vom Fernwärmekreislauf 1 durchflossene Wärmetauscher 5 gibt seine Wärme an einen Warmwasservorlauf 11 ab, der zu den Warmwasserzapfstellen einer Wohnung führt, wobei in den Rücklauf entsprechend der abgezapften Menge des Warmwassers Kaltwasser eingespeist wird.

Ein im Warmwasservorlauf 11 angeordneter Temperaturfühler 13 mißt die Temperatur im Warmwasservorlauf 11 und steuert über eine Regeleinrichtung das Umschaltventil 6.

Wird Warmwasser nicht gezapft, so sinkt die Temperatur im Warmwasserkreislauf 11, 12 entsprechend der Kurve A langsam ab bis die Temperatur T-Minimum erreicht ist. Dann wird das Umschaltventil so gesteuert, daß der Heizkreislauf aus und der Kreislauf durch den Wärmetauscher eingeschaltet wird. Würde bei einem Zapfen von Warmwasser abgewartet, bis die Kurve B der Warmwasservorlauftemperatur unter T-Minimum sinkt, so würde ein noch weiteres Absinken der Temperatur erfolgen, obwohl das Umschaltventil 6 bereits zu Gunsten des Wärmetauschers umgeschaltet hat. Um ein solch langsames und zu spätes Reagieren zu verhindern, wird an der Stelle C die Temperatur des Warmwasservorlaufs in der Weise gemessen, daß ein starker schneller Temperaturabfall durch eine elektronische Auswerteinrichtung erfaßt wird, die dafür sorgt, daß aufgrund des schnellen Temperaturabsinkens das Umschaltventil zu Gunsten des Kreislaufes durch den Wärmetauscher sofort umgeschaltet wird, obwohl T-Minimum noch nicht erreicht wurde. Hierdurch wird erreicht, daß der Verbraucher nicht erst lange warten muß, bis ausreichend warmes Wasser zur Zapfstelle gelangt.

Sobald ein Zapfen von Warmwasser beendet ist, wird am Wärmetauscher keine Wärme mehr übertragen und die Temperatur an der Meßstelle 14 steigt schnell an. Erreicht die Temperatur 14 einen an der Auswerteinrichtung eingestellten Wert schließt das Umschaltventil 6 den Kreislauf durch den Wärmetauscher und öffent wieder den Heizkreislauf.

Das Heizwasser der Wohnungsstation kann aus Fernwärmenetzen unterschiedlicher Größe und auch von einem in einem Wohnhaus oder benachbarten Gebäude vorhandenen Gas- oder Ölkessel geliefert werden.

## Patentansprüche

1. Wohnungsanschlußstation eines Fernwärmenetzes mit einem von der Fernwärme gespeisten Fernwärmekreislauf (1), von dem ein Heizkreislauf (9) zum Erwärmen des Gebäudes abzweigt und in dem ein Wärmetauscher (5) liegt, der das Trinkwasser erwärmt, wobei im Fernwärmekreislauf ein Umschaltventil (6) angeordnet ist, das zwischen Fernwärme- und Heizkreislauf umschaltet, und im Vorlauf (11) der Trinkwassererwärmung ein Temperaturfühler (13) sich befindet, **dadurch gekennzeichnet**, daß durch die vom Temperaturfühler (13) ermittelten Werte das Umschaltventil (6) gesteuert wird.

2. Wohnungsanschlußstation nach Anspruch 1, **dadurch gekennzeichnet**, daß durch die Werte des Temperaturfühlers (13) das Umschaltventil (6) derart steuerbar ist, daß bei sinkender Temperatur im Vorlauf (11) der Trinkwassererwärmung das Umschaltventil (6) den Heizkreislauf (9) schließt und den Zu- oder Ablauf des Wärmetauschers öffnet.

3. Wohnungsanschlußstation nach Anspruch 2, **dadurch gekennzeichnet**, daß bei einem schnellen Absinken der Temperatur im Vorlauf (11) der Trinkwassererwärmung das Umschaltventil (6) den Heizkreislauf (9) sofort schießt.

4. Wohnungsanschlußstation nach Anspruch 1, **dadurch gekennzeichnet**, daß das Umschaltventil bei einem schnellen Ansteigen der Temperatur (14) im Fernwärmerücklauf (16) den Zu- oder Ablauf (15, 16) des Wärmetauschers schließt und den Heizkreislauf (9) öffnet.
